(19) Europäisches Patentamt
European Patent Office
Office européen des brevets

(11) EP 0 580 697 B1

(12) EUROPÄISCHE PATENTSCHRIFT

(45) Veröffentlichungstag und Bekanntmachung des Hinweises auf die Patenterteilung:
20.10.1999 Patentblatt 1999/42

(21) Anmeldenummer: 92909058.7

(22) Anmeldetag: 17.04.1992

(51) Int Cl.6: **C08K 5/00**, C09D 201/00

(86) Internationale Anmeldenummer:
PCT/EP92/00859

(87) Internationale Veröffentlichungsnummer:
WO 92/18565 (29.10.1992 Gazette 1992/27)

(54) **VERGILBUNG VON DECKLACKEN VERHINDERNDE PLASTISOLE, VERFAHREN ZU IHRER HERSTELLUNG UND IHRE VERWENDUNG**

PLASTISOLS WHICH PREVENT COVERING LACQUERS FROM YELLOWING, A METHOD OF PRODUCING THEM, AND THEIR USE

PLASTISOLS EMPECHANT LE JAUNISSEMENT DE LAQUES DE FINITION, PROCEDE POUR LEUR FABRICATION, AINSI QUE LEUR MISE EN UVRE

(84) Benannte Vertragsstaaten:
AT BE CH DE DK ES FR GB GR IT LI LU NL SE

(30) Priorität: 19.04.1991 DE 4112823

(43) Veröffentlichungstag der Anmeldung:
02.02.1994 Patentblatt 1994/05

(73) Patentinhaber: Henkel Teroson GmbH
69123 Heidelberg (DE)

(72) Erfinder:
• KÖSTERS, Bernhard
D-6904 Eppelheim (DE)
• MÜNZ, Xaver
D-6945 Hirschberg 1 (DE)
• ASANG, Manfred
D-6830 Schwetzingen (DE)

(74) Vertreter: Hase, Christian, Dr. et al
Henkel KGaA
Patente (TTP),
Henkelstrasse 67
40589 Düsseldorf (DE)

(56) Entgegenhaltungen:
EP-A- 0 150 803          DE-A- 2 654 871
DE-A- 2 840 996          US-A- 4 900 771

**Beschreibung**

Die Erfindung betrifft Plastisole, die eine Vergilbung von darauf aufgebrachten Decklacken verhindern, ein Verfahren zu ihrer Herstellung und ihre Verwendung.

In der Automobilindustrie werden Plastisole zum Unterbodenschutz, zur Nahtabdichtung und -versiegelung verwendet. Den Plastisolen, bei denen es sich um Dispersionen feiner Polymerteilchen in flüssigen Weichmachern handelt, werden je nach Anwendungszweck weitere Zuschlagstoffe zugesetzt. Derartige Zuschlagstoffe sind Fließverbesserer, Stabilisatoren, Haftvermittler, Füllstoffe und wasserabsorbierende Substanzen. Haftvermittler werden den Plastisolen zugesetzt, um eine Langzeithaftung der Plastisole auf Stahl oder verzinkten, verzinnten oder elektrotauchlackierten Blechen zu bewirken. Als Haftvermittler für PVC-Plastisole werden beispielsweise basische Verbindungen wie Polyaminoamide (PAA) verwendet. Demgegenüber werden als Haftvermittler für Polymethacryl-Plastisole üblicherweise basische Vinylimidazole verwendet, denen gegebenenfalls Polyaminoamide als zusätzliche Haftvermittlerkomponente zugesetzt sind. Auch die anderen Zuschlagstoffe sind häufig basische Verbindungen, z.B. Calciumoxid, Bariumoxid, und Calciumcarbonat. Bei der abschließenden Lackierung werden die Plastisole mit überlackiert.

Seitdem Elektrotauchlacke, insbesondere kathodische Elektrotauchlacke zur Grundierung von Stahlteilen und Blechen verwendet werden, wird beobachtet, daß die auf die Plastisole aufgebrachten Lacke mit der Zeit vergilben. Dieses Problem betrifft vor allen Dingen helle, pastellfarbene und weiße Lacke, da bei diesen die Verfärbung leichter bemerkt wird, insbesondere wenn diese ohne Zwischenlack (Füller) appliziert werden. Besonders gravierend ist die Vergilbung bei weißen Lacken. Die Vergilbung tritt in den meisten Fällen nicht sofort nach dem Einbrennen der Decklackierung sondern erst nach einiger Zeit auf. Hierbei handelt es sich nicht um eine Vergilbung des Plastisols selbst, die möglicherweise durch die Decklackschicht durchscheinen könnte, sondern um eine allmähliche Verfärbung des Decklackes selbst.

Zur Lösung dieses Problems ist in der DE-A-38 21 926 vorgeschlagen worden, den Plastisolen saure Kationenaustauscher als Additive zuzusetzen, deren Wirkung darin gesehen wird, daß sie beim Einbrennen frei werdende Amine binden. Der Zusatz saurer Substanzen hat jedoch den Nachteil, daß sie die Wirkung basischer Haftvermittler verringern oder gar verhindern. Saure Komponenten reagieren ferner mit anderen in dem Plastisol gegebenenfalls vorhandenen basischen Zusatzstoffen wie Calciumoxid und Kreide, so daß Kohlendioxid und Wasser entstehen und die aus den Plastisolen erzeugten Plastigele porig werden.

Der Erfindung liegt die Aufgabe zugrunde, die Vergilbung eines Decklacks zu verhindern, der auf mit einem Elektrotauchlack grundierten und mit Plastisolen behandelten Stahlteilen oder Metallblechen aufgebracht ist, sei es mit oder ohne Zwischenlack, ohne daß dazu saure Plastisol- Zuschlagstoffe verwendet werden müssen.

Diese Aufgabe wird durch Plastisole gelöst, die als basische Haftvermittlerkomponenten Polyaminoamide oder Vinylimidazol und als vergilbungshemmendes Additiv in einer Menge ab etwa 0,001 Gew.-% einfache Aldehyde, Ketone, deren Derivate, Oligomere oder Mischungen derselben enthalten, wobei die Derivate oder Oligomeren Aldehyde und/oder Ketone freisetzen können.

Bevorzugte Ausführungsformen der Erfindung sind Gegenstand der Unteransprüche.

Als vergilbungsverhinderndes Additiv eignen sich insbesondere einfache aliphatische Monoaldehyde wie Formaldehyd, Acetaldehyd und Propionaldehyd oder einfache aromatische Aldehyde und Ketone wie Benzaldehyd, Benzophenon oder Benzochinon sowie deren Derivate. Als besonders wirksam hat sich Hexamethylentetramin (Urotropin oder 1,3,5,7-Tetraazaadamantan), das unter den genannten Bedingungen Formaldehyd abspaltet, gezeigt. Geeignet sind aber beispielsweise auch Di-, Tri- oder Tetramere (Oligomere) der Aldehyde wie Trioxymethylen (1,3,5-Trioxan), Paraldehyd (2,4,6-Trimethyl-1,3,5-trioxan) oder Metaldehyd (ein Tetrameres des Acetalaldehyds $(C_2H_4O)_4$).

Die erfindungsgemäßen Plastisole wirken bereits ab einem Gehalt von etwa 0,001 % an "Antivergilbungsadditiv" vergilbungshemmend. Vorzugsweise beträgt der Gehalt dieses Additivs 0,05 bis 5 %, insbesondere wird ein Gehalt von 0,1 bis 3 % bevorzugt.

Der vergilbungshemmende Effekt wird besonders deutlich, wenn neben den beispielsweise als Haftvermittler einsetzbaren basischen Polyaminoamiden auch mehrere der übrigen Zusatzstoffe basischer Natur und in relativ großen Mengen im Plastisol vorhanden sind. Vorzugsweise enthalten auch die Plastisole nur basische Haftvermittlerkomponenten. Aber selbst wenn diese basischen Komponenten auf das gerade noch erforderliche Maß verringert werden, tritt unter sehr widrigen Umständen (Dickschicht-Elektrotauchlackierung, warme, sehr feuchte Atmosphäre usw.) bei Anwesenheit des vergilbungshemmenden Additivs keine Verfärbung auf.

Es wird vermutet, daß die vergilbend wirkende Substanz eine basische Verbindung ist, die mit sauren Verbindungen abgefangen werden könnte. Der Einsatz saurer Additive soll aber vermieden werden. Durch das Aldehyd oder Keton, das gegebenenfalls erst aus einem Derivat freigesetzt werden muß, wird die Konzentration der vergilbend wirkenden basischen Substanz vermutlich zumindest soweit herabgesetzt, daß keine Vergilbung mehr beobachtbar ist.

Das Plastisol kann selbstverständlich noch andere Additive enthalten, deren Wirkungen durch das Antivergilbungsadditiv nicht beeinträchtigt werden.

Das vergilbungshemmende Additiv wird bei der Herstellung des Plastisols zusammen mit den anderen zuzusetzenden Additiven eingemischt. Die einzelnen Additive können aber auch vor dem Vermischen zur Plastisolmasse einzeln beispielsweise mit dem flüssigen Weichmacher angeteigt werden und dem Plastisol in dieser Form zugemischt werden.

| Ausführungsbeispiele: Plastisole | | | | |
|---|---|---|---|---|
| PVC-Plastisole | $A_a$ | $A_b$ | $B_a$ | $B_b$ |
| PVC-Homopolymer (K-Wert 70) | 20 | 20 | 30 | 30 |
| Weichmacher (DINP) | 30 | 30 | 35 | 35 |
| Verdünner (Testbenzin 180/210) | 5 | 5 | - | - |
| Füllstoff (Kreide) | 43 | 44 | 29 | 30 |
| CaO | - | - | 1 | 1 |
| $TiO_2$ | - | - | 2 | 2 |
| $SiO_2$ | - | - | 0,5 | 0,5 |
| bas. Bleisulfat | - | - | 0,5 | 0,5 |
| Haftvermittler(PAA) | 1 | 1 | 1 | 1 |
| Urotropin | 1 | - | 1 | - |
| | $\overline{100}$ | $\overline{100}$ | $\overline{100}$ | $\overline{100}$ |

| Acrylat-Plastisole: | $C_a$ | $C_b$ |
|---|---|---|
| Poly-MMA/BMA mit 2% Vinylimidazol | 30 | 30 |
| DINP | 40 | 40 |
| Kreide | 29,2 | 28,9 |
| CaO | 0,5 | 0,5 |
| Urotropin | 0,3 | - |
| | $\overline{100}$ | $\overline{100}$ |
| MMA = Methylmethacrylat; BMA = Butylmethacrylat; | | |

Herstellungsmethoden:

1. PVC-Plastisol $A_a$ mit allen Komponenten direkt Mischen als Eintopfverfahren.
PVC-Plastisol $A_b$ ohne Urotropin ebenso.
2. PVC-Plastisol $A_a$: Urotropin wird in Weichmacher dispergiert, auf einer Walze fein abgerieben und dann dem Plastisol zugesetzt.
3. PVC-Plastisol $B_a$ (bei $B_b$ ohne Urotropin): alle festen Zusatzstoffe ($CaCO_3$, CaO, $TiO_2$ usw. + Urotropin) mit wenig Weichmacher mischen, abreiben und zum Schluß den Rest, d.h. PAA und Polymere zugeben.
4. Acrylatplastisole ($C_a$ und $C_b$), wie 1.

Beim Fahrzeugbau werden die Bleche, nachdem sie mit einem Elektrotauchlack beschichtet und beispielsweise an auftretenden Nähten mit Plastisol behandelt worden sind, mit einem Decklack versehen. Dieser Lack wird anschließend eingebrannt.

Beispielsweise wird auf die mit Elektrotauchlack beschichteten Bleche zur Erzielung des erfindungsgemäßen Effekts Plastisol appliziert und bei 140°C 30 Minuten geliert. Dann werden gegebenenfalls Füllerlacke auf das Blech und das Plastisol gespritzt, 10 Minuten abgelüftet und bei 130°C eingebrannt. Anschließend wird der Decklack aufgesprüht, 10 Minuten getrocknet und 20 Minuten bei 130°C eingebrannt.

Zur beschleunigten Bestimmung des Ausmaßes der bei derartig behandelten Blechen auftretenden Vergilbung wurden Testbleche hergestellt.

1. Vorbehandlung der Testbleche

2. Elektrotauchlack beschichtete Bleche werden aufeinandergelegt, wobei zwischen ihnen mit Hilfe dazwischenliegender Kugeln ein Abstand von 1 mm eingehalten wird. Die Bleche werden fest in Alufolie eingewickelt, um auf den inneren Oberflächen beider Bleche während der folgenden 30 minütigen Hitzebehandlung bei 180°C hohe Kondensatkonzentrationen zu erhalten. Nach dem Abkühlen wird die Alufolie entfernt und zur besseren Bestimmung des Einflusses des Elektrotauchlacks ein Streifen von 10 bis 20 mm des Elektrotauchlacks von der Blechmitte entfernt.

3. Herstellung der Testbleche

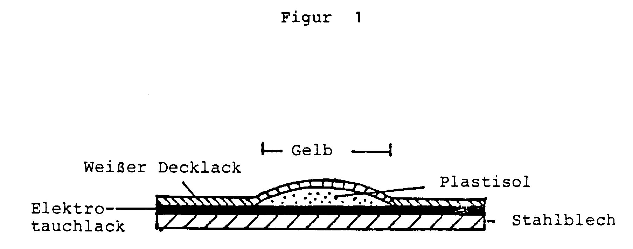

Das Plastisol wird wie ein Wulst von 0 bis 4 mm Höhe und 50 mm Länge auf die Innenseite des Testblechs appliziert. Danach wird das Plastisol bei der benötigten Temperatur vernetzt. Der weiße Decklack wird in einer Dicke von 30 bis 40 μm auf das abgekühlte Blech gesprüht und bei den erforderlichen Einbrennbedingungen gehärtet (siehe Fig. 1).

4. Lagerbedingungen

Die Testbleche werden in einen fest verschlossenen Kasten, dessen Boden mit Wasser bedeckt ist (Wassertiefe 10 bis 20 mm), gehängt. Der Kasten wird bei 60°C gelagert.

5. Auswertung

Je nach Qualität können die ersten Ergebnisse nach mehreren Stunden, Tagen oder ein Paar Wochen erhalten werden.

Die Vergilbung der Bleche wird jeweils mit Werten von 0 bis 10 beurteilt, wobei 0 eine vollständige Vergilbung und 10 praktisch keine Vergilbung bedeuten.

| Versuchsergebnisse: | | | | | | |
|---|---|---|---|---|---|---|
| Plastisol Nr. | | hergestellt nach | geprüft | | Beurteilung nach x Tagen | Bewertung |
| | | | nach Schnellmeth. | d. Liegenlassen b. RT | | |
| 1) | $A_a$ | 1 | x | | 2 | 10 |
| 2) | $A_b$ | 1 | x | | 2 | 4 |
| 3) | $A_a$ | 1 | x | | 6 | 10 |
| 4) | $A_b$ | 1 | x | | 6 | 2 |
| 5) | $A_a$ | 2 | x | | 2 | 10 |
| 6) | $A_a$ | 2 | x | | 6 | 10 |
| 7) | $A_a$ | 3 | | x | 8 | 10 |
| 8) | $A_b$ | 3 | | x | 8 | 7 |
| 9) | $A_a$ | 3 | | x | 40 | 10 |
| 10) | $A_b$ | 3 | | x | 40 | 2 |
| 11) | $B_a$ | 1 | x | | 6 | 10 |
| 12) | $B_b$ | 1 | x | | 6 | 3 |
| 13) | $C_a$ | 4 | x | | 6 | 10 |
| 14) | $C_b$ | 4 | x | | 6 | 2 |

Der Ansatz mit b ist immer ohne Urotropin gefertigt.

Die aus der Tabelle ersichtlichen Ergebnisse zeigen eindeutig, daß die Plastisole, denen ein Antivergilbungsadditiv zugesetzt wurde, den herkömmlichen Plastisolen in bezug auf die Vergilbungserscheinung überlegen sind. Auch nach relativ langer Bewitterung ist keine Verfärbung erkennbar.

Die Erfindung umfaßt ferner ein Verfahren zur Herstellung der erfindungsgemäßen Plastisole sowie ihre Verwendung auf mit Elektrotauchlack grundierten Stahlteilen und Blechen.

**Patentansprüche**

1. Plastisol, dadurch gekennzeichnet, daß es als basische Haftvermittlerkomponenten Polyaminoamide oder Vinylimidazol und als vergilbungshemmendes Additiv in einer Menge <u>ab</u> etwa 0,001 Gew.-% einfache Aldehyde, Ketone, deren Derivate, Oligomere oder Mischungen derselben enthält, wobei die Derivate oder ()ligomeren Aldehyde und/oder Ketone freisetzen können.

2. Plastisol nach Anspruch 1, dadurch gekennzeichnet, daß das Additiv im Plastisol in einer Menge von mehr als 0,001 Gew.%, bezogen auf das gesamte Plastisol, enthalten ist.

3. Plastisol nach einem der Ansprüche 1 oder 2, dadurch gekennzeichnet, daß der Gehalt dieses Additivs 0,05 bis 5 Gew.%, insbesondere 0,05 bis 3 Gew.% ist.

4. Plastisol nach einem der Ansprüche 1 bis 3, dadurch gekennzeichnet, daß es sich um Plastisole auf PVC- oder Polymethacrylat-Basis handelt.

5. Plastisol nach einem der Ansprüche 1 bis 4, dadurch gekennzeichnet, daß als Additiv einfache Monoaldehyde, -ketone, deren Derivate, Oligomere oder Mischungen davon vorhanden sind.

6. Plastisol nach einem der Ansprüche 1 bis 5, dadurch gekennzeichnet, daß es sich bei dem Additiv um Formaldehyd, Acetaldehyd, Propionaldehyd und deren Derivate oder Oligomere handelt.

7. Plastisol nach einem der Ansprüche 1 bis 6, dadurch gekennzeichnet, daß das Additiv Hexamethylentetramin ist.

8. Plastisol nach einem der Ansprüche 1 bis 7, dadurch gekennzeichnet, daß das Plastisol weitere übliche Zuschlagstoffe enthält.

9. Verfahren zur Herstellung von Plastisolen gemäß einem der Ansprüche 1 bis 8, dadurch gekennzeichnet, daß das vergilbungshemmende Additiv zusammen mit den anderen zuzusetzenden Additiven in die Plastisolmasse eingemischt wird oder die einzelnen Additive vor dem Vermischen mit der Plastisolmasse einzeln mit dem Weichmacher angeteigt werden und der Plastisolmasse in dieser Form zugemischt werden.

10. Verwendung von Plastisolen, nach einem der Ansprüche 1 bis 8, auf mit Elektrotauchlacken grundierten Stahlteilen oder Blechen, welche anschließend überlackiert werden.

11. Verwendung nach Anspruch 10, dadurch gekennzeichnet, daß das Additiv im Plastisol in einer Menge von mehr als 0,001 Gew.%, bezogen auf das gesamte Plastisol, enthalten ist.

12. Verwendung nach einem der Ansprüche 10 oder 11, dadurch gekennzeichnet, daß der Gehalt dieses Additivs 0,05 bis 5 Gew.%, insbesondere 0,05 bis 3 Gew.% ist.

13. Verwendung nach einem der Ansprüche 10 bis 12, dadurch gekennzeichnet, daß es sich um Plastisole auf PVC- oder Polymethacrylat-Basis handelt.

14. Verwendung nach einem der Ansprüche 10 bis 13, dadurch gekennzeichnet, daß es sich bei dem Additiv um Monoaldehyde und Monoketone, insbesondere Formaldehyd, Acetaldehyd, Propionaldehyd und deren Derivate oder Oligomere handelt.

15. Verwendung nach einem der Ansprüche 10 bis 14, dadurch gekennzeichnet, daß als Additiv Hexamethylentetramin verwendet wird.

16. Verwendung nach einem der Ansprüche 10 bis 15, dadurch gekennzeichnet, daß die Plastisole weitere übliche zuschlagstoffe enthalten.

## Claims

1. A plastisol, characterized in that it contains polyaminoamides or vinyl imidazole as basic coupling components and simple aldehydes, ketones, derivatives or oligomers thereof or mixtures thereof in a quantity starting from about 0.001% by weight as a yellowing-inhibiting additive, the derivatives or oligomers being capable of releasing aldehydes and/or ketones.

2. A plastisol as claimed in claim 1, characterized in that the additive is present in the plastisol in a quantity of more than 0.001% by weight, based on the plastisol as a whole.

3. A plastisol as claimed in claim 1 or 2, characterized in that the content of this additive is from 0.05 to 5% by weight and, more particularly, from 0.05 to 3% by weight.

4. A plastisol as claimed in any of claims 1 to 3, characterized in that the plastisols are PVC- or polymethacrylate-based.

5. A plastisol as claimed in any of claims 1 to 4, characterized in that simple monoaldehydes, ketones, derivatives or oligomers thereof or mixtures thereof are present as the additive.

6. A plastisol as claimed in any of claims 1 to 5, characterized in that the additive is formaldehyde, acetaldehyde, propionaldehyde and a derivative or oligomer thereof.

7. A plastisol as claimed in any of claims 1 to 6, characterized in that the additive is hexamethylene tetramine.

8. A plastisol as claimed in any of claims 1 to 7, characterized in that the plastisol contains other typical additives.

9. A process for the production of the plastisols claimed in any of claims 1 to 8, characterized in that the yellowing-inhibiting additive is mixed into the plastisol compound together with the other additives or the individual additives are each made into a paste with the plasticizer before mixing with the plastisol compound and are added to and mixed with the plastisol compound in that form.

10. The use of the plastisols claimed in any of claims 1 to 8 on steel parts or plates primed with electrodeposition paints which are then overpainted.

11. The use claimed in claim 10, characterized in that the additive is present in the plastisol in a quantity of more than 0.001% by weight, based on the plastisol as a whole.

12. The use claimed in claim 10 or 11, characterized in that the content of this additive is from 0.05 to 5% by weight and, more particularly, from 0.05 to 3% by weight.

13. The use claimed in any of claims 10 to 12, characterized in that the plastisols are PVC- or polymethacrylate-based.

14. The use claimed in any of claims 10 to 13, characterized in that the additive is selected from monoaldehydes and monoketones, more especially formaldehyde, acetaldehyde, propionaldehyde and derivatives or oligomers thereof.

15. The use claimed in any of claims 10 to 14, characterized in that hexamethylene tetramine is used as the additive.

16. The use claimed in any of claims 10 to 15, characterized in that the plastisols contain other typical additives.

## Revendications

1. Plastisol,
caractérisé en ce qu'il contient,
comme composant d'agent adhésif basique, un polyaminoamide ou un vinylimidazole et, comme additif anti-jaunissement, en une quantité supérieure à environ 0,001 % en poids, des aldéhydes simples, des cétones simples, leurs dérivés, des oligomères ou des mélanges de ceux-ci, les dérivés ou les oligomères pouvant dégager un aldéhyde et/ou une cétone.

2. Plastisol selon la revendication 1,
caractérisé en ce que
l'additif est contenu dans le plastisol en une quantité supérieure à 0,001 % en poids, rapporté à l'ensemble du plastisol.

3. Plastisol selon l'une des revendications 1 ou 2,
caractérisé en ce que
la teneur de cet additif est de 0,05 à 5 % en poids, en particulier de 0,05 à 3 % en poids.

4. Plastisol selon l'une des revendications 1 à 3,
caractérisé en ce qu'il
s'agit de plastisols à base PVC ou polyméthacrylate.

5. Plastisol selon une ou plusieurs des revendications 1 à 4,
caractérisé en ce qu'
on a comme additif des monoaldéhydes, des monocétones simples, leurs dérivés, des oligomères ou des mélanges de ceux-ci.

6. Plastisol selon l'une des revendications 1 à 5,
caractérisé en ce qu'
il s'agit, concernant l'additif, de formaldéhyde, acétaldéhyde, propionaldéhyde et leurs dérivés ou oligomères.

7. Plastisol selon l'une des revendications 1 à 6,
caractérisé en ce que
l'additif est de l'hexaméthylène tétramine.

8. Plastisol selon l'une des revendications 1 à 7,
caractérisé en ce que
le plastisol contient d'autres adjuvants usuels.

9. Procédé de fabrication de plastisols selon l'une des revendications 1 à 8,
caractérisé en ce que
l'additif anti-jaunissement est introduit avec mélange dans la masse de plastisol, conjointement avec les autres additifs à ajouter, ou les différents additifs sont empâtés avant mélange avec la masse de plastisol, individuellement avec le plastifiant, et la masse de plastisol étant ajoutée avec mélange sous cette forme.

10. Utilisation de plastisols selon l'une des revendications 1 à 8, sur des pièces ou tôles d'acier ayant reçu un apprêt par vernissage par électrophorèse, puis revêtues d'un vernissage extérieur.

11. Utilisation selon la revendication 10,
caractérisée en ce que
l'additif est contenu dans le plastisol en une quantité supérieure à 0,001 % en poids, rapporté à l'ensemble du plastisol.

12. Utilisation selon l'une des revendications 10 ou 11,
caractérisée en ce que
la teneur de cet additif est de 0,05 à 5 % en poids, en particulier de 0,05 à 3 % en poids.

13. Utilisation selon l'une des revendications 10 à 12,
caractérisée en ce qu'
il s'agit de plastisols à base de PVC ou de polyméthacrylate.

14. Utilisation selon l'une des revendications 10 à 13,
caractérisée en ce qu'
il s'agit, concernant l'additif, de monoaldéhydes et de monocétones, en particulier de formaldéhyde, acétaldéhyde, propionaldéhyde et leurs dérivés ou oligomères.

**15.** Utilisation selon l'une des revendications 10 à 14,
caractérisée en ce qu'
on utilise comme additif de l'hexaméthylènetétramine.

**16.** Utilisation selon l'une des revendications 10 à 15,
caractérisée en ce que
les plastisols contiennent d'autres adjuvants usuels.

Figur   1

Weißer Decklack

⊢— Gelb ——⊣

Plastisol

Elektrotauchlack

Stahlblech